Europäisches Patentamt

European Patent Office

Office européen des brevets

(11) Publication number: **0 259 963**
**A2**

## (12) EUROPEAN PATENT APPLICATION

(21) Application number: **87306737.5**

(22) Date of filing: **30.07.87**

(51) Int. Cl.⁴: **A01D 17/02** , **A01D 33/00** , **A01D 33/12**

(30) Priority: **07.08.86 GB 8619331**

(43) Date of publication of application:
**16.03.88 Bulletin 88/11**

(84) Designated Contracting States:
**FR GB NL**

(71) Applicant: **Robilliard, Lloyd Elias**
**Summerland Route de Pleinmont**
**Torteval Guernsey Channel Islands(GB)**

(72) Inventor: **Robilliard, Lloyd Elias**
**Summerland Route de Pleinmont**
**Torteval Guernsey Channel Islands(GB)**

(74) Representative: **Sherrard-Smith, Hugh et al**
**Appleyard, Lees & Co. 15 Clare Road**
**Halifax, HX1 2HY West Yorkshire(GB)**

(54) Improvements relating to separating products grown in soil.

(57) The machine is driven in the direction of arrow (12) in order to pull a shear plate (10) underneath soil in which bulbs (20) have been grown. The soil and products underneath which the shear has passed are fed by a conveyor (14) upwardly and rearwardly onto a sifting mechanism (16). Soil is separated from the sifting mechanism (16) to return to the ground, and a roller (18) at the rear of the machine compacts the soil before returning the separated bulbs (20) to the ground.

The machine is powered by winding up a cable (26) which is fixed at a location in front of the machine.

Fig.1.

## IMPROVEMENTS RELATING TO SEPARATING PRODUCTS GROWN IN SOIL

The present invention relates to a machine arranged to lift soil and separate products grown in the soil therefrom, a sifting arrangement and an anchor post and is particularly, although not exclusively related to the separation of bulbs and corms grown in the soil.

It is known to separate bulbs and corms grown in soil from the soil by using a fork to dig up and turn over the soil, and then pick out the bulbs and corms from the loose soil. However, such a method of separating the bulbs and corms from the soil involves extremely hard physical work and is time consuming and therefore expensive.

According to one aspect of the present invention a machine arranged to lift soil and separate products grown in the soil therefrom comprises a shear or other means arranged to be driven along and through the soil, and means for permitting the soil which the shear or other means has passed beneath to be passed to sifting means arranged to separate the products from the soil. Such a machine provides a quick and relatively effortless way of separating products grown in the soil from the soil.

Preferably the width of the shear is adjustable, that feature being of particular advantage where bulbs grown in rows in greenhouses are to be separated from the soil in which they are grown as such rows may differ in width from one location to another. The width of a passage from the shear to the sifting means may be adjustable. By making the width of that passage adjustable, the shear is able to be driven through a relatively wide extent of soil with a corresponding thickness in the passage from the shear to the sifting means, and yet the width of the shear can be reduced with a corresponding reduction in the width of the conveyor such that the conveyor does not protrude unduly beyond the width through which the shear is being driven and thereby come up against parts associated with the greenhouse, such as heating pipes and paths which may be located immediately adjacent to a row of bulbs. The machine may include conveying means arranged to pass the soil and products from the shear to the sifting means, and the conveying means may be arranged to lift the soil from the shear to the sifting means.

The soil may be arranged to pass through the sifting means and be returned to the ground prior to depositing products separated from the soil onto the ground which allows the products merely to be lifted off the ground rather than be extracted from a mixture of loose soil and products. The machine may include a roller arranged to pass over the soil which has been returned to the ground from the sifting means prior to the deposition of the products which have been separated from the soil onto the ground. Thus the machine may leave a flattened surface having products located on top thereof to make the collection of those products extremely simple and quick.

The machine may include driving means arranged to pull the machine along to drive the shear along and through the soil which driving means may include a cable extending in the intended direction of travel of the machine, and driven means arranged to engage and pull the machine along the cable. As the machine includes the driving means, it may be used in applications where no external driving means are available, and the provision of the cable allows a sufficiently great force to be applied to the machine to enable the shear to be driven along and through the soil. A portion of the cable remote from the machine may be connected to an anchor, and when the machine is being pulled such that the shear is driven along and through the soil, the cable may extend from the anchor in the region of the ground level, but the cable may also be capable of extending from a region of the anchor spaced from ground level whereby the driving means may be used to pull the shear upwardly and out of the soil when it is no longer being required to be driven through the soil. With the shear above ground level any soil left on the shear can easily be removed.

The sifting means may be connected to the machine such that it can extend generally to the rear of the machine, in the operative position, or in an upwards direction, to assist in the transportation and/or manouevring of the machine when it is not lifting and separating products.

The machine may include a pair of wheels on which it may be transported. At least one of those wheels may be movable from the position in which it engages the ground to another position in which it does not so engage the ground which may allow the machine to pass extremely near the side of the greenhouse, and/or heating pipes and at least one of the wheels may be removable from the machine. At least one of the wheels may be adjustable in height relative to the machine, and by adjustment of the height of that wheel the shear may be caused to penetrate the soil to a substantially constant depth across its width. A roller which may be driven, may be provided to support the machine, which support may be provided when one wheel is removed.

The machine may include ground engaging means in the region of the shear which may be arranged to limit the depth of soil penetrated by the shear. The relative height of the ground engaging means may be adjustable whereby the depth of the shear into the soil may be adjustable. The ground engaging means may comprise at least one, and preferably two wheels, which wheel or wheels may be pivotally mounted to allow the machine to be steered thereby. The wheel or wheels may be powered.

The machine may include ground penetrating means located to one side and to the front of the machine, with respect to the intended direction of travel, which may be arranged to cut or break up soil to be engaged by the shear prior to the shear engaging the soil. The ground penetrating means may comprise a rotatable or reciprocatable member. As there is no standard trench width, the hard shoulder of the path may be encountered, and this could push the shear into the pipe or other obstacles.

According to another aspect of the present invention a sifting arrangement for a machine arranged to separate products grown in the soil from the soil includes a first sieve having a series of relatively fine spaces arranged to restrain the passage of the products through the spaces and a second sieve having a series of relatively coarse spaces arranged to allow the passage of the products through the space, the soil and products leaving the second sieve being arranged to pass to the first sieve. Such a sifting arrangement is extremely useful where the soil tends to be presented to the sifting arrangement in lumps. Lumps of soil generally do not contain bulbs/corms; these fall through the second sieve allowing lumps of soil larger than the corms to travel back to the crushing roller and these are crushed to a size small enough to allow them to fall through the first sieve and thus back to the ground. Large stones may be encountered by the crushing roller and the roller may be spring loaded to ride over those stones. The reason for removing lumps of soil is that they would end up being mixed up with the corms on the ground. The second sieve may be located above the first sieve. Either or both sieves may be comprised by a series of generally parallel spaced members. Either or both sieves may be arranged to be shaken or reciprocated. Means may be provided to bear against the soil on the second sieve to cause their passage through the second sieve, and the spaces of the second sieve in the region where means bear against the soil to cause their passage through the second sieve may be reduced from spaces elsewhere on the second sieve.

According to a further aspect of the present invention, an anchor post includes an anchor arranged to extend into the ground, means for permitting a cable to extend from the post in the region of the ground, and an upper region of the post spaced from the anchor being capable of being restrained against movement of the post caused by tension in a cable extending from the connection post in the region of the ground. Such an anchor post is able to take a considerable tension in a cable connected thereto as the bending moment tending to pivot the post about the anchor in the ground by a force exerted on the cable is able to be resisted by relatively minor force provided by the restraint of the anchor post, which restraining force is applied at a distance from the anchor.

The upper region of the anchor post may be arranged to be connected to a portion of the greenhouse, or alternatively or additionally the upper region may be arranged to be connected to a guy rope extending in the opposite direction from the post to that in which a cable is arranged to extend.

The anchor post may include a slide hammer to assist in forcing the anchor into the ground, which slide hammer may be provided by a member capable of being reciprocated up and down on the anchor post. Alternatively or additionally, the slide hammer may be used in reverse to assist with the removal of the anchor.

The present invention includes any combination of the herein described features.

The invention may be carried into practice in various ways, but one embodiment will now be described by way of example and with reference to the accompanying drawings, in which:-

Figure 1 is a schematic side view of a bulb or corm lifting and separating machine in an operative position;

Figure 2 is a schematic plan view of Figure 1;

Figure 3 is a schematic side view of Figure 1 with the machine in an inoperative position suitable for transporting or manoeuvring the machine;

Figure 4 is a schematic front view of the front portion of the machine;

Figure 5 is a plan view similar to figure 2 showing the details of the attachment of a cable to the machine;

Figure 6 is a schematic front view of part of the machine showing the details of the transportation wheels;

Figures 7A and 7B are respectively a plan and a side view of the front of the machine showing the details of the sides of the conveyor,

Figure 8 is a side view of the front of the machine whilst digging, and

Figure 9A and 9B are a front and a plan view respectively showing the details of a modification included at the front of the conveyor sides.

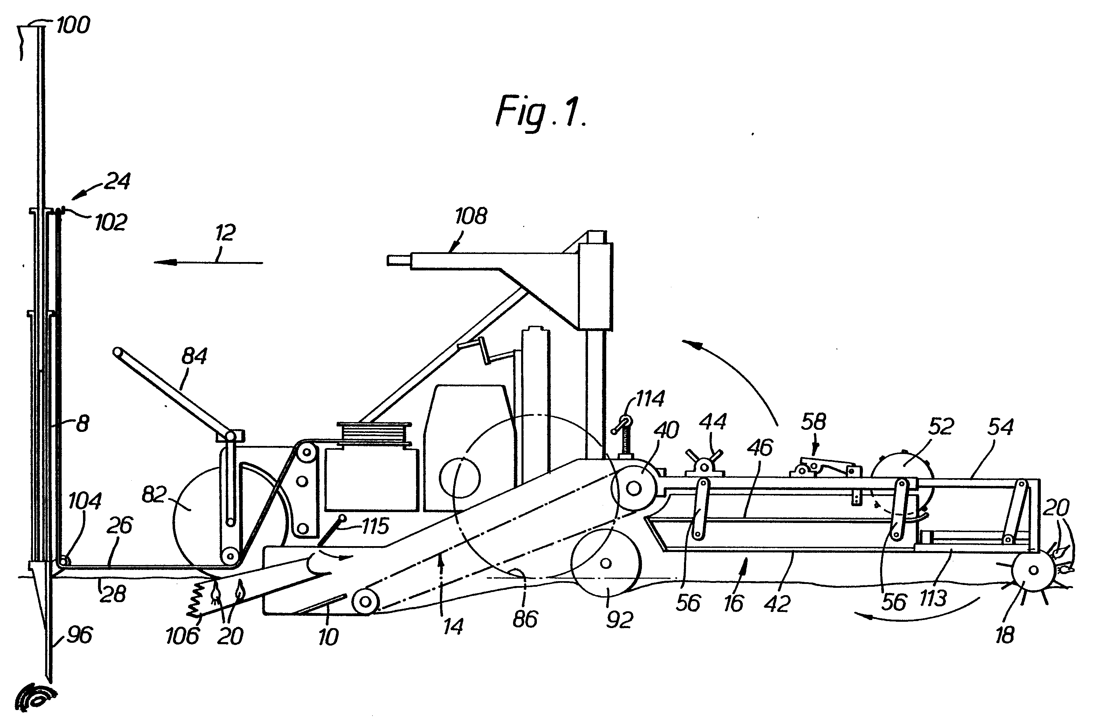

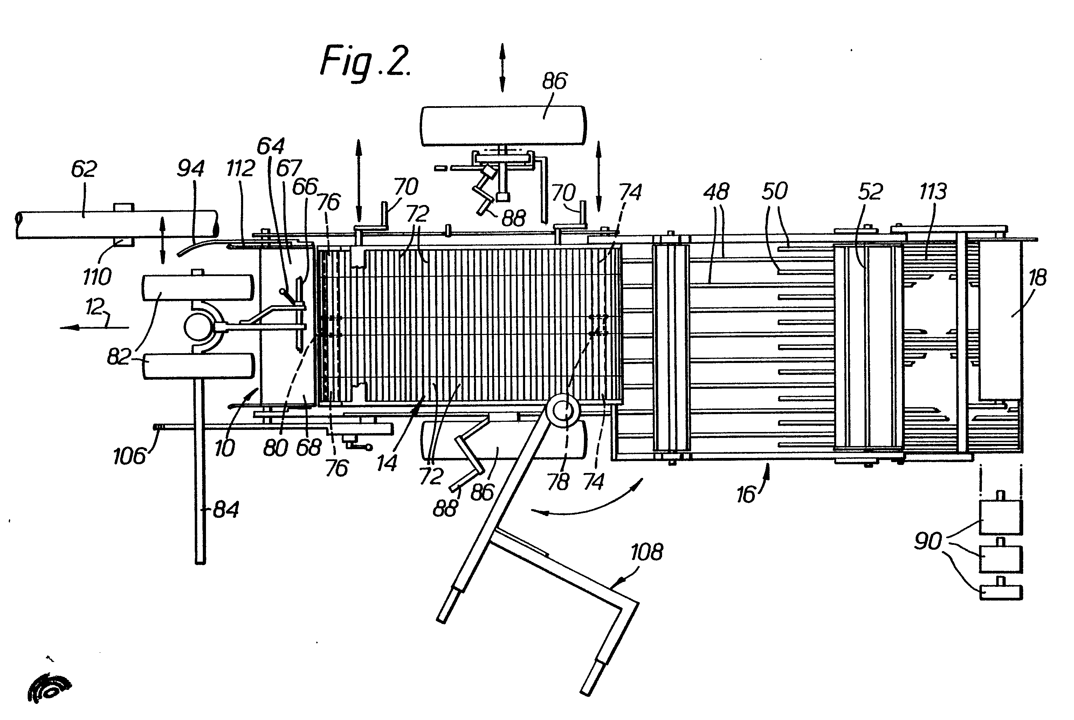

As shown in Figures 1 and 2, the machine includes a shear plate 10 inclined downwardly and forwardly to the intended direction of travel indicated by arrow 12. A conveyor 14 leads upwardly and rearwardly from the shear plate 10 to a sifting mechanism 16 which is arranged to deposit separated soil onto the ground in front of a roller 18, and to allow the separated bulbs or corms 20 to be deposited onto the ground after the roller 18 has passed over the ground.

A row is prepared for a machine prior to the bulbs or corms being removed by mowing a crop at ground level with a reciprocating knife mower and clearing the foliage, leaving the surface clean for digging. Alternatively, foliage can be left to dry up and be cleared; or the foliage can be left on prior to using the machine.

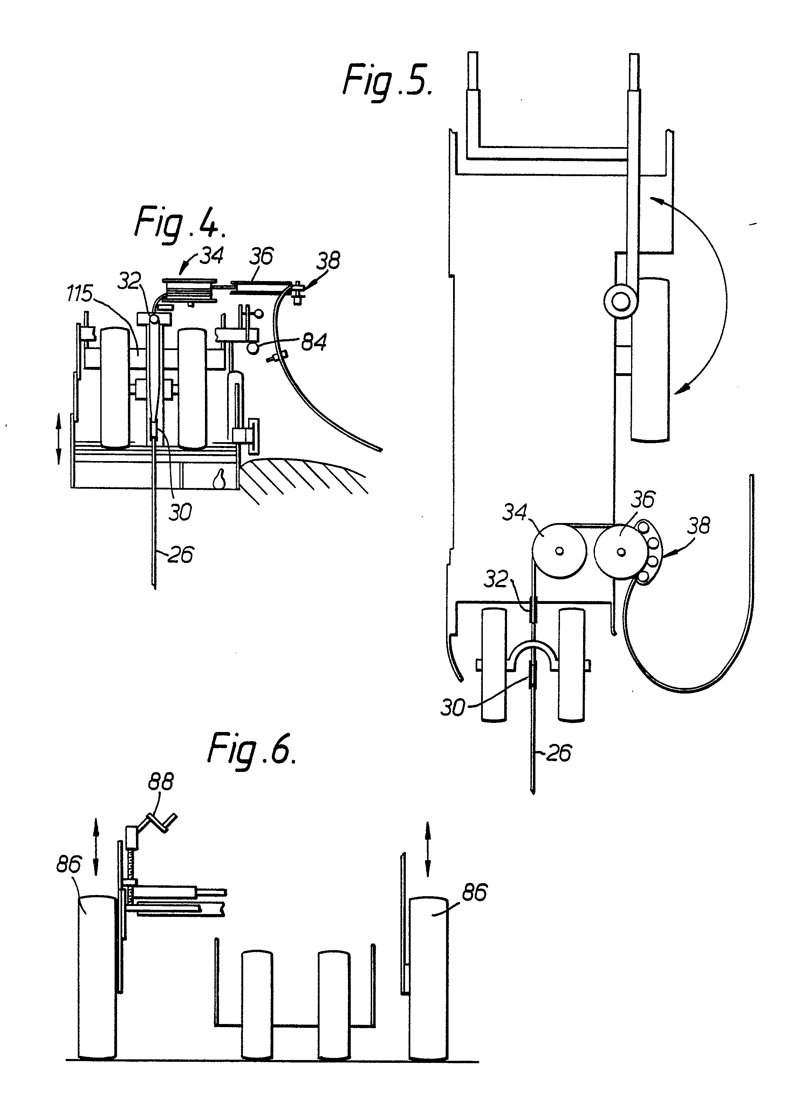

As shown in Figure 1, an anchor post 24 is fixed in the ground and has a cable 26 extending from just above the ground level 28 towards the machine. As shown in Figures 4 and 5, the cable 26 passes partially around a lower guide roller 30 on the machine, and then partially around an upper guide roller 32 before being wound around a winch drum 34 a few times. The cable then passes around another drum 36 and is held here by clamped rollers 38 before feeding itself to the ground.

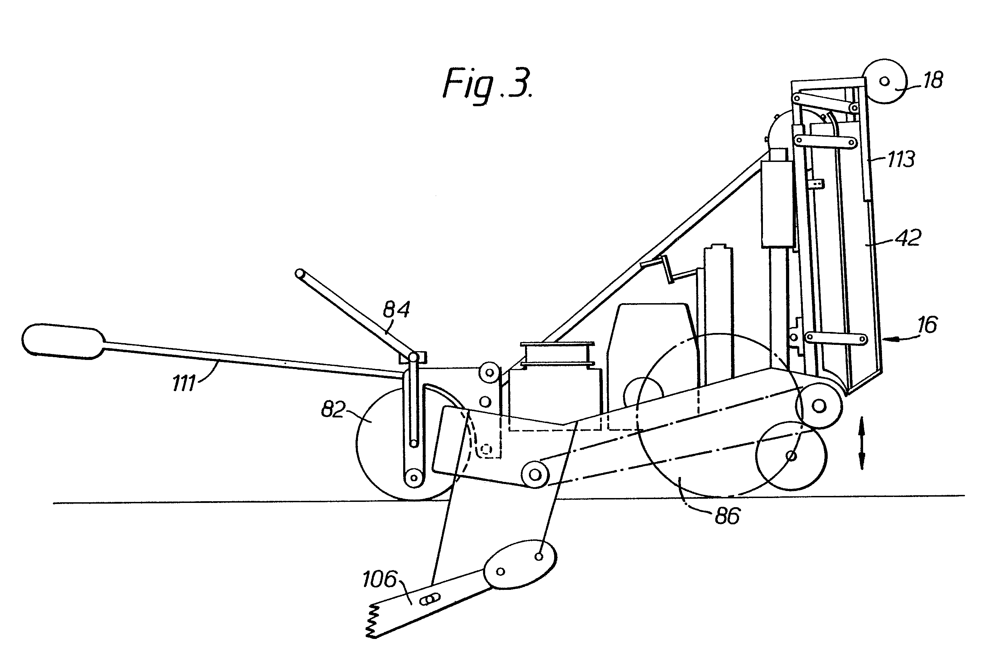

The machine is initially reversed into the required position at one end of a greenhouse, and the soil in the region of the shear plate is loosened or removed manually to allow the shear plate to penetrate the ground. As shown in Figure 3, a removable pole 111 with a padded end is shown. The pole is used by the operator as a lever to push the front of the machine over, and to force the shear into the ground at the start of digging. The front of the machine can also be lifted in order to raise the shear and more the machine over across paths with the use of the pole. The pad can also act as a rest and seat for the operator. The winch drum 34 is then driven by a motor on the machine to cause the machine to be pulled along the ground towards the post 24. The shear plate 10 passes along and through the soil at a slightly greater depth than that to which the corms or bulbs 20 extend.

The soil and bulbs then lie on the conveyor 14 which is driven by a roller 40 to carry the soil and bulbs upwardly. To assist with the removal of soil and crop from the shear when it is lifted clear of the ground, a swinging plate 115 is provided which opens and closes with the conveyor to suit the width of the shear. The swinging plate can be swung by manual means or by the use of hydraulics, to sweep the soil in a backwards direction onto the moving conveyor to clear the machine. The spaced bars of the conveyor allow some soil to separate from the crop by falling downwardly. When the soil and bulbs pass over the upper edge of the conveyor the smaller lumps of the soil fall down onto a lower sieve comprising a forward sieve 42 and a rearward sieve 113. The sieves 42 and 113 may be replaced by sieves having different characteristics by sliding the sieves relative to a supporting frame 54. Those lumps which are not sufficiently reduced in size pass onto an upper sieve 46 defined by space bars 48 shown in Figure 2. As the lumps on the upper sieve pass towards the rear of the upper sieve they pass over additional bars 50 extending between the bars 48 thereby reducing the spaces afforded by the upper sieve in that region. A rotating breaker drum or crusher 52 then breaks up the lumps to cause the soil to pass to the lower sieve. Some soil conditions can cause very large lumps of soil to remain unbroken. When they reach the upper edge of the conveyor a rotating mill 44 is fitted to break down large lumps in size and so to alleviate congestion.

The sieves of the sifting mechanism are suspended from each side of the frame 54 by four links 56 pivotally connected to the frame and sieves, and an offset crank mechanism 58 mounted on the frame and connected to the sieves cause the sieves to reciprocate to and fro to assist in the shaking of the soil through the sieves. The reciprocating action is such that the soil and products move in a rearward direction across the bars of the sieves.

The bulbs or corms are held on the lower sieve and pass rearwardly over the roller 18, which compacts the ground, to lie on top of the rolled ground.

Where the soil is in good condition and the crop is of a delicate nature, such as mature cormlets attached to the corms which are prone to falling off in the rear shaker, the rear shaker can be left in a raised position and the spaced bars of the conveyor are sufficient to separate the soil from the crop. The crop is thus allowed to return to the ground over the rear of the conveyor without further agitation in the shaker.

As shown in Figure 2, the effective width of the shear plate 10 and the conveyor 14 can be adjusted in order to allow the machine to dig rows in greenhouses of different widths.

Adjustment of the conveyor width is achieved by inserting and rotating a pair of spaced handles 70 extending from one side of the machine to cause transverse bars 72 extending from either side of the conveyor to overlap to a greater or lesser extent. Each of the bars 72 extending from a common side of the conveyor are connected together to form a chain and each pass around separate upper and lower cylinders 74 and 76 slidably mounted on shafts 78 and 80 to allow movement of at least one of the pairs of cylinders 74 and 76 along their shafts. An alternative method of adjustment (not shown), is to use a scissor action mechanism with one handle driving a screw to open and close the conveyor.

The sheer is made up of overlapping plates 67, 68 which slide to increase or decrease the width of the shear plate.

The shear/conveyor assembly can be raised or lowered to the required position. The steering handle 84 is inserted into position A shown in Figure 4 with the use of the lever. A locking pin is provided to lock the assembly into the required position. Alternatively hydraulics can be used to raise or lower the assemble, and to hold the assembly.

The shear 10 and conveyor assembly 14 are thus set to the required width. As the front wheel assembly carries the cable guide rollers 30, 32 so as to maintain a central pull through the soil, the front wheel assembly is centralised. The steering wheels assembly 82 has a locking bolt 64 which, when released, allows the front wheel assembly to slide on shafts 66 to the centre of the re-adjusted conveyor assembly.

The machine includes a pair of steering wheels 82 which rest on the ground in advance of the shear plate penetrating the ground. The steering wheels are pivotally mounted about an upwardly extending axis and have connected thereto a handle 84 projecting from one side of the machine to allow the machine to be steered. It will be appreciated that the handle can be inserted in many positions around the steering head depending on where the operator is standing. The front steering wheels can turn 360° and be locked in any position to assist in handling. The wheels may be powered which assists in the turning of tight corners.

A pair of transport wheels 86 are provided in the central region of the machine and extending from either side thereof. As shown in Figure 2, one of the wheels 86 is detachably mounted on the machine such that it can be removed when digging adjacent to the water pipe 62 or the edge of a greenhouse. The height of the other wheel 86 at least is adjustable, as shown in Figure 6, by rotation of a handle 88 whereby the depth of the soil penetrated by the shear plate can be maintained generally constant across the width. This adjustment may be done hydraulically (not shown).

The effective width of the rear roller 18 may be adjustable, as shown in Figure 2, either by adding or removing extensions 90 to the roller or by replacing the roller with rollers of different widths (not shown) to roll the soil at the same time that it is being dug and at the same width.

A centrally located driven roller 92, shown in Figure 1, is provided to support the machine when the wheel has been removed to dig along pipes and the edge of a greenhouse. The roller 92 and the remaining wheel 86, acting together, are used to move the machine when the other wheel 86 is removed. In an alternative embodiment (not shown) small wheels with pneumatic tyres replace the roller 92.

As the machine is designed to work under very low tie-bars as in the structure of some greenhouses, it may be necessary at times to increase the clearance between the conveyor and the main body of the machine, when a crop is to be dug with the foliage still attached. Two screw jacks 114 are fitted, one on each side of the rear of the conveyor assembly. By this method the clearance can be increased.

A curved deflector skid 94 (shown in Figure 2) is provided at the front and to one side of the machine, to prevent the greenhouse or machines being damaged by hitting posts supporting water pipes, for instance.

The anchor post 24 includes an anchor 96 which is driven into the ground by reciprocating a slide hammer or pipe 98 on the post. The upper end of the post is tied to the greenhouse by a line 100 or by a guy rope (not shown). The cable 26 is connected to the post by a hook 102 located towards the upper end of the post, and the cable passes downwardly alongside the post and around a quick release pin 104 located just above ground level.

When the machine reaches the post, the quick release pin is removed and, by continued driving of the winch drum, the shear plate of the machine is pulled out of the ground. With the shear raised above the ground level, the soil left on the shear can be removed. In an alternative embodiment (not shown), a hydraulic system may be used to raise the shear plate.

In some locations, the earth adjacent to the rows has been compacted over the years. To enable the machine to dig such rows and to remain on course, a reciprocating arm 106, shown in Figure 3, is detachably connected to one side of the machine to cut a passage through the soil before the shear plate or before the conveyor side plate 112 passes through the soil.

When manoeuvering the machine into and out of greenhouses, and over heating pipes, it is desirable that the length be reduced. To this end the sifting mechanism is able to be pivoted upwardly and forwardly about the axis of the upper conveyor shaft to occupy the position shown in Figure 3, where it is releasably held. The sifiting mechanism may start off in the raised position at the start of digging a row to allow the machine to be backed up as near as possible to the wall of the greenhouse. The roller 18 is also to pivot in a clockwise direction to lie against what was the underside of the lower sieve. Alternatively or additionally, the frame 54 may be able to slide to enable the sieve 113 to slide under the sieve 42. When the rear shaker assembly is raised off the ground it can occupy different positions and the machine balances on the wheel and roller. With the use of bar 84 fitted into sockets on various parts of the machine, this enables the operator to spin the machine around when in tight corners. This feature makes this heavy machine very easy to handle. In the position shown in Figure 3, the transport wheels 86 are lowered to support the machine, which may be driven forwardly or rearwardly. The controls are mounted on handle bars 108 which can pivot through 180° and be locked in graduated intermediate positions.

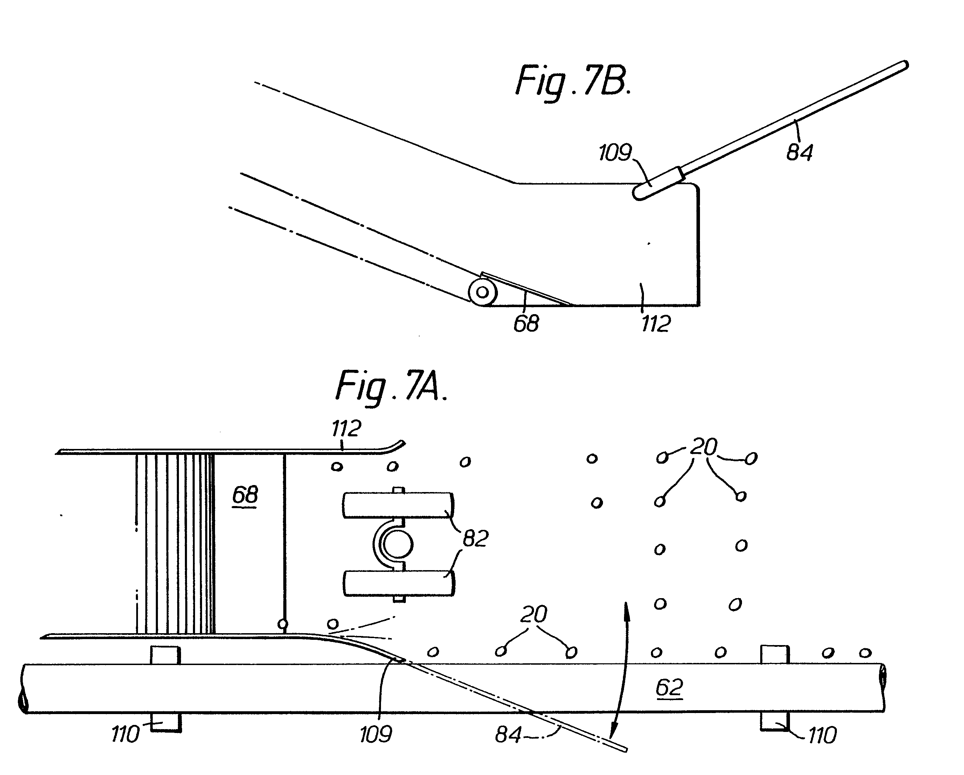

Figure 7A and 7B show a modification to the machine shown in Figure 2 in that the deflector skid 94 has been removed. A handle 84 is inserted into a socket 109, fitted to the conveyor side plate 112. The side plate is made of spring steel and thus, with the use of handle 84, the side plate 112 can be bent, with the application of pressure to handle 84, in either direction. As some crops are planted close to the heating pipes 62, the pipe pillars 110 which support the heating pipes, can cause some crop to be missed when the machine is slewed around pillars 110. With the machine travelling in a straight line, prior to a pillar 110 being encountered, the handle 84 can be pushed in an outward direction causing side plate 112 to bend towards the pipe 62. This enables soil and crop along the pipe and between the pillars to be gathered. If the side plate is bent in an inward direction, for instance when the side plate is adjacent to a pillar 110, the curved sideplate can act as a deflector to avoid collision with the pillar.

The conveyor side plates 112 are splayed out at the front leading edge. As the shear assembly is driven through the soil the gap that is left on each side of the conveyor allows side movement and assists with steering.

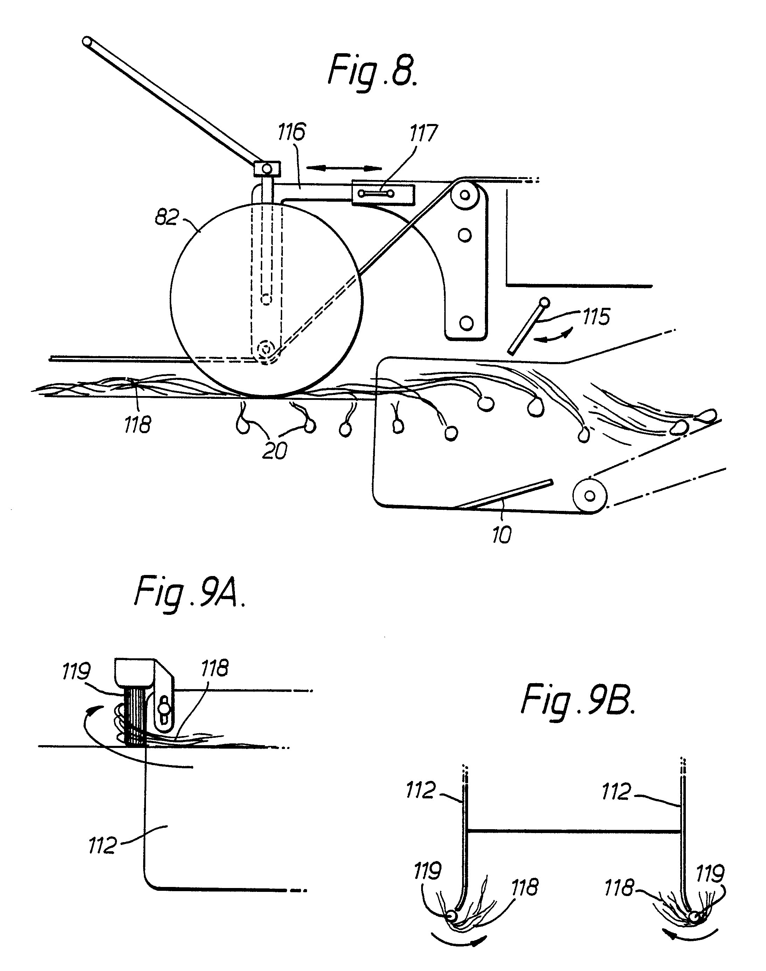

When digging a crop with the foliage uncut and lying on the ground, as the front wheels 82 have to roll on top of the foliage, this restrains the foliage from moving up into the conveyor. Accordingly the front wheels are able to slide in and out as shown in Figure 8. Figure 8 shows front wheels extended. An extension shaft 116 has a locking bolt 117. Thus foliage 118 is free to travel backwards without being trapped under the wheels.

When digging crops with the foliage 118 un-cut and lying on the ground, congestion can build up along leading edges of conveyor side plates 112 (see Figures 9A and 9B). Rotary splined shafts 119 can be mounted which are adjustable up and down to suit ground level. The rotating shafts have the effect of dragging the foliage into the conveyor assembly; thus keeping side plates 112 free of congestion.

Figures 9A and 9B show revolving shafts 119 dragging the foliage into the conveyor. (The shafts may be driven by small hydraulic motors).

Although the specific embodiment has been described in relation to the lifting of bulbs or corms in greenhouses it will be appreciated that it is applicable to the lifting of any product in the ground in any location.

**Claims**

1. A machine arranged to sift soil and separate products grown in the soil therefrom comprising a ground engaging member (10) arranged to be driven along and through the soil, and means (115,14) for permitting the soil which the ground engaging member has passed beneath to be passed to sifting means (14,16) arranged to separate the products (20) from the soil.

2. A machine as claimed in Claim 1 in which the sifting means comprises conveyor means (14).

3. A machine as claimed in Claim 1 or 2 in which the width of the ground engaging member (10) and/or the width of the means (115,14) for permitting the soil which the ground engaging member has passed beneath to be passed to the sifting means are adjustable.

4. A machine as claimed in Claim 3 in which the width of at least one side (112) of the means for permitting the soil which the ground engaging member has passed beneath to be passed to sifting means is adjustable whilst the machine is moving through the soil.

5. A machine as claimed in any preceding claim in which the sifting means (16) allow soil to be returned to the ground prior to returning products to the ground.

6. A machine as claimed in Claim 5 in which a portion (18) of the machine is arranged to engage with the soil which has been returned to the ground prior to the products (20) being returned to the ground.

7. A machine as claimed in any preceding claim including driving means arranged to pull a machine along, the driving means including a cable (26) extending in the intended direction of travel of the machine, and driven means arranged to engage and pull the machine along the cable.

8. A machine as claimed in Claim 7 in which a portion of the cable (26) remote from the machine is capable of extending downwardly towards the machine whereby, when the driven means engage and pull the machine along the cable, the ground engaging member (10) may be lifted upwardly and out of soil.

9. A machine as claimed in any preceding claim in which the sifting means are movable between a first position, in which the extend generally to the rear of the machine, and a second position in which they extend in an upwards direction.

10. A machine as claimed in any preceding claim including a ground penetrating member (106) at at least one side of the machine arranged to engage with soil in advance of the ground engaging member (10) passing through that soil.

Fig.1.

0 259 963

Fig.2.

Fig.3.

0 259 963

0 259 963

Fig .5.

Fig .4.

Fig .6.

Fig.7B.

109    84
68    112

Fig.7A.

112
68    82
20
20
110    109    84    62    110

0 259 963

## Fig.8.

116    117

82

115

118

20

10

## Fig.9A.

119    118

112

## Fig.9B.

112    112

119    118    118    119